(19)

**Europäisches Patentamt**

**European Patent Office**

**Office européen des brevets**

(11) **EP 2 472 073 A1**

(12) **EUROPEAN PATENT APPLICATION**

(43) Date of publication:
**04.07.2012 Bulletin 2012/27**

(51) Int Cl.:
*F01K 23/10* (2006.01)   *F01K 23/14* (2006.01)
*F02C 9/22* (2006.01)   *F02C 9/28* (2006.01)

(21) Application number: **11195835.1**

(22) Date of filing: **27.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.12.2010 IT TO20101077**

(71) Applicant: **Ansaldo Energia S.p.A.**
**Genova (IT)**

(72) Inventors:
• **Pesce, Paolo**
  **16152 Genova (IT)**
• **Alecci, Marco**
  **16129 Genova (IT)**

(74) Representative: **Jorio, Paolo et al**
**Studio Torta S.p.A.**
**Via Viotti, 9**
**10121 Torino (IT)**

(54) **Method of controlling a combined-cycle system in single-shaft configuration and combined-cycle system in single-shaft configuration**

(57)   A combined-cycle system includes a compressor (8), a gas turbine (10), a steam turbine (3), and an electric generator (4), which are coupled to the same shaft (5). A method of controlling the system envisages detecting a current compression ratio ($\beta_C$) of the compressor (8), calculating a normalized compression ratio ($\beta_N$) on the basis of the current compression ratio ($\beta_C$), and determining a load condition of the gas turbine (10) on the basis of the normalized compression ratio ($\beta_N$). Moreover, a setpoint ($SP_{TE}$, $SP_P$) is selected for at least one operating quantity ($T_E$, $Q_{FP}$) of the gas turbine (10), and regulating signals ($S_{IGV}$, $S_{FV}$) are applied to actuators (15, 16) of the gas turbine (10) so that the operating quantity ($T_E$, $Q_{FP}$) of the gas turbine (10) tends to reach the setpoint.

EP 2 472 073 A1

**Description**

The present invention relates to a method of controlling a combined-cycle system and to a combined-cycle system.

As is known, for a gas turbine to operate efficiently it is necessary for different parameters to be set in an optimal way as a function of the load, i.e., of the power that the gas turbine is effectively supplying, and of the ambient conditions. A wrong setting of the parameters leads in fact to a deterioration in the conditions of combustion, and this causes, on the one hand, a reduced efficiency and, on the other hand, an increase in pollutant emissions.

It has been noted that in modern gas turbines, which use burners with low NOx emissions, the flowrate of fuel fed to the pilot burners and the temperature of the exhaust gas are particularly critical, and setting of reference values that are not adequate as a function of the operating conditions has severe consequences on the efficiency of the machine.

The identification of the operating conditions does not in general pose problems in autonomous gas-turbine systems and in combined-cycle systems of a "multishaft" type (i.e., in which each gas turbine is mounted on a respective shaft that is independent with respect to the shaft of the steam turbine and is coupled to a respective electric generator). In this case, in fact, the power supplied by the gas turbine can be easily estimated from the electric power supplied by the generator coupled to the gas turbine itself. The measurement of the electric power is practically always available.

Difficulties arise, instead, in the case of combined-cycle systems of a "single-shaft" type, where a gas turbine, a steam turbine, and an electric generator are coupled to the same shaft. The power supplied by the gas turbine can hence not be estimated from the electric power supplied by the generator, which also contains a contribution of the steam turbine. In addition, it should be considered that, in many operating conditions, where correct setting of the parameters is particularly important, the load associated, respectively, to the gas turbine and to the steam turbine can depart sensibly from the power references provided by the system controller. In some transients, for instance, the system may be required to deliver a supplementary power rapidly, and the system controller consequently modifies the power reference for the gas turbine and for the steam turbine. The response of the steam turbine is, however, very slow with respect to that of the gas turbine, which in the initial steps of the transient supplies practically all the supplementary power required. The power references are hence unreliable at least during the transients.

The operating conditions of the steam turbine may vary in an unforeseeable way also for other reasons. For instance, a fraction of the steam can be drawn off to be used for district-heating systems.

US 2006/201132 A1 describes a method for controlling a combined-cycle system having a compressor, a gas turbine, a steam turbine, and an electric generator, all coupled to the same shaft. The method envisages determining the current compression ratio of the compressor, calculating a limit of temperature of the gas turbine, and controlling a flowrate of fuel and an angle of inlet guide vanes of the compressor.

The aim of the present invention is hence to provide a method of controlling a combined-cycle system and a combined-cycle system that is free from the limitations described and, in particular, enables the operating parameters of the gas turbine to be set correctly as a function of the load.

According to the present invention a method of controlling a combined-cycle system and a combined-cycle system are provided as defined, respectively, in Claims 1 and 10.

The present invention will now be described with reference to the annexed drawings, which illustrate a non-limiting example of embodiment thereof and in which:

- Figure 1 is a simplified block diagram of a combined-cycle system for the production of electric energy in accordance with one embodiment of the present invention;
- Figure 2 is a more detailed block diagram of a part of the system of Figure 1; and
- Figure 3 is a flowchart regarding a method for controlling a combined-cycle system in accordance with one embodiment of the present invention.

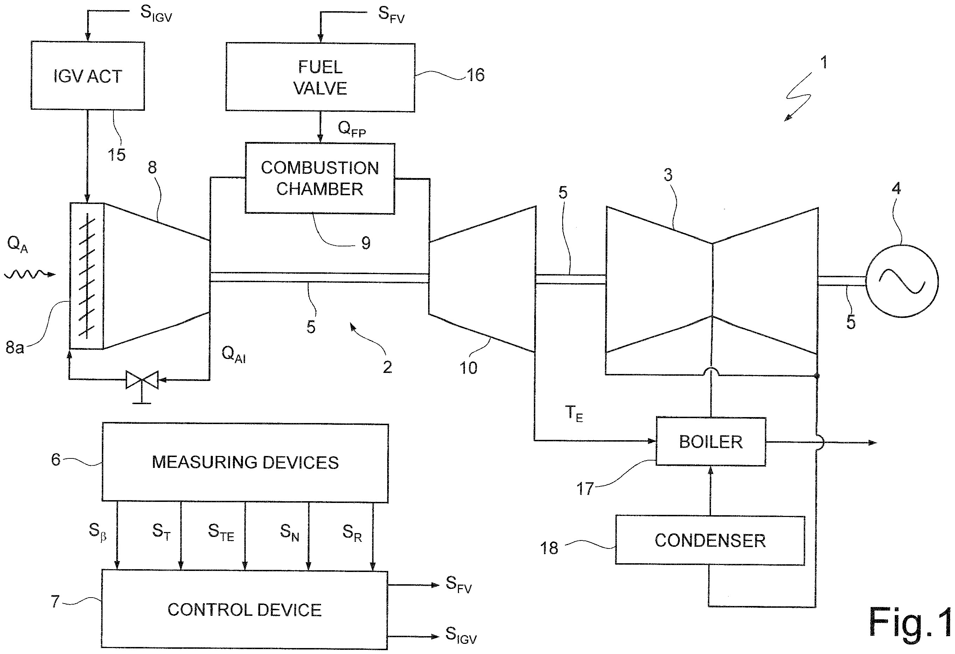

With reference to Figure 1, a combined-cycle system for the production of electric power is designated by the number 1. The system 1 comprises a gas-turbine assembly 2, a steam turbine 3, and an electric generator 4 in single-shaft configuration, i.e., all coupled on one and the same shaft 5.

A control device 7 controls the gas-turbine assembly 2, the steam turbine 3, and the electric generator 4 on the basis of measurement signals supplied by measuring devices 6 in such a way that the operating conditions of the system 1 are optimised for supplying an electric power $P_E$ required by the loads.

The gas-turbine assembly 2 comprises a compressor 8, a combustion chamber 9, and a gas turbine 10. The compressor 8 and the gas turbine 10 are mounted on the shaft 5.

The compressor 10 is provided with an anti-icing device 11 that comprises a recirculation line 12 and a regulating valve 13. The recirculation line 12 connects the outlet and the inlet of the compressor 8, and the regulating valve 13 enables an anti-icing air flowrate $Q_{AI}$ (at approximately 400°C) to be taken from the outlet of the compressor 8 and to be fed back at inlet to prevent the formation of ice.

An input stage of the compressor 8 is provided with a stage 8a of inlet guide vanes (IGVs), which are controlled by the control device 7 through an IGV actuator 15 for regulating an air flowrate $Q_A$ taken in by the compressor 8. The air flowrate $Q_A$ taken in by the compressor 8 in turn enables regulation of the exhaust gas temperature $T_E$.

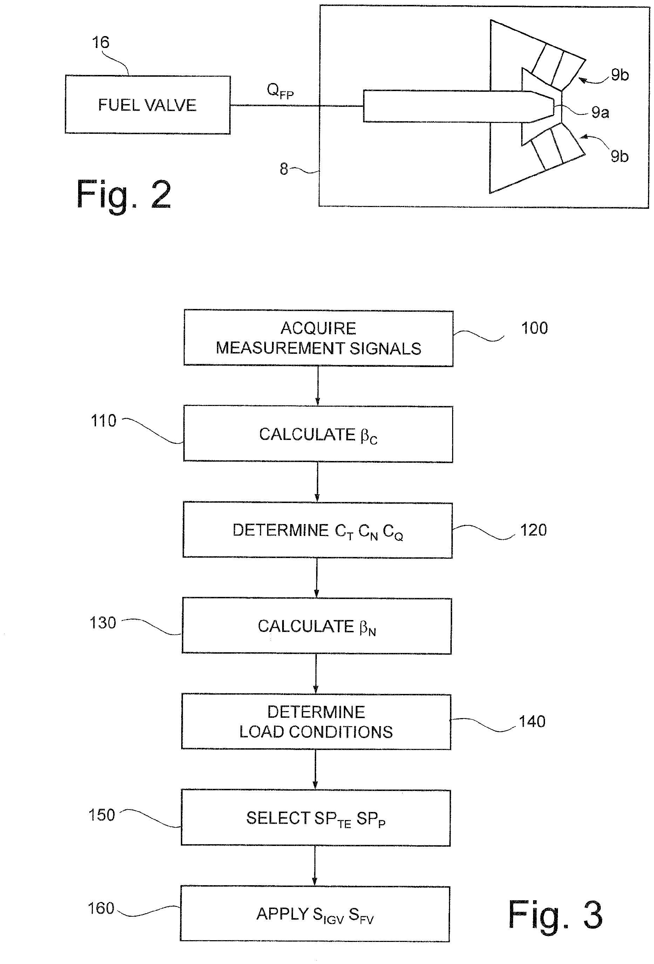

The combustion chamber 9 is provided with pilot burners 9a and premixing burners 9b (see Figure 2). A pilot fuel flowrate $Q_{FP}$ fed to the pilot burners 9a is regulated by the control device 7, which acts on a fuel valve 16.

The system 1 further comprises a recovery boiler 17, which uses hot exhaust gas from the gas turbine 10 to generate steam for the steam turbine 3, and a condenser 18, which receives the steam processed by the steam turbine 3.

The measuring devices 6 supply measurement signals indicative of operating quantities of the system 1. In particular, the measurement signals comprise:

a signal $S_\beta$ indicative of a current compression ratio $\beta_C$ of the compressor 8;
a signal $S_T$ indicative of the ambient temperature;
a signal $S_{TE}$ indicative of the exhaust gas temperature $T_E$;
a signal $S_N$ indicative of the angular speed of the shaft 5; and
a signal $S_R$ indicative of the position of the regulating valve 13.

The control device 7 shares the load requested to the system between the gas turbine 10 and the steam turbine 3, detects the current operating conditions at least of the gas turbine 10 and selects optimal reference values (setpoints) of operating quantities of the system 1 as a function of the detected operating conditions. Moreover, the control device 7 applies regulating signals to the actuators of the system 1, in particular to the IGV actuator 15 and to the fuel valve 16 in such a way that the operating quantities tend to reach the respective setpoints. The control device 8 also performs a function of supervision of the accessory apparatuses, such as, for example, the anti-icing device 11. In particular, the control device 7 acts on the regulating valve 13 so as to activate the anti-icing device 11 and regulate the anti-icing air flowrate $Q_{AI}$ when the ambient temperature drops below a threshold.

In order to determine the operating conditions of the gas turbine 10, the control device 7 uses the current compression ratio $\beta_C$ of the compressor 8, which is obtained from the signal $S_\beta$ supplied by the measuring devices 6.

The current compression ratio $\beta_C$ is normalized with respect to reference operating conditions and corrected to take into account the effect of factors such as the ambient conditions, the rotation speed of the shaft 5, and the action of the anti-icing device 11.

The reference conditions may be ISO conditions (temperature T = 15°C; pressure P = 1.013 bar).

The normalized compression ratio $\beta_N$ is given by

$$\beta_N = \frac{\beta_C}{\beta_R} C_1 C_2 C_3 \qquad (1)$$

where $\beta_{RIF}$ is the compression ratio in the reference conditions, and $C_T$, $C_N$, $C_Q$ are, respectively, a corrective temperature coefficient, a corrective speed coefficient, and a corrective flowrate coefficient.

The corrective temperature coefficient $C_T$ takes into account the effect of the ambient temperature, which is detected by the measuring devices 6 (signal $S_T$).

The corrective speed coefficient $C_2$ depends upon the rotation speed of the gas turbine 10, which can also be detected by the measuring devices 6 (signal $S_N$).

The corrective flowrate coefficient $C_3$ depends upon an estimate of the anti-icing air flowrate $Q_{AI}$ that is taken at output from the compressor 8 and fed back at input to the compressor 8 itself. In practice, the third corrective coefficient $C_3$ takes into account that not the entire air flowrate $Q_A$ taken in by the compressor 8 is introduced into the combustion chamber 9 and, moreover, the recirculation of air from the outlet to the inlet of the compressor 8 modifies the conditions of temperature. In one embodiment, estimation of the anti-icing air flowrate $Q_{AI}$ is determined on the basis of the position of the regulating valve 13, which is set by the control device 7. In a different embodiment, the anti-icing air flowrate $Q_{AI}$ is measured, for instance with a flowmeter.

It has been found that the normalized compression ratio $\beta_N$ defined above represents the power supplied by the gas turbine 10, normalized with respect to the same conditions (for example ISO or standard conditions). Hence, in practice, it is possible to determine the load conditions of the gas turbine 10 starting from the calculation of the normalized compression ratio $\beta_N$.

The control device 7 operates as described hereinafter, with reference to Figure 3, to optimize operation of the gas turbine 10 as a function of the load conditions.

The control device 7 first of all acquires the measurement signals supplied by the measuring devices 6, amongst which in particular (block 100):

the signal $S_\beta$ indicative of the current compression ratio $\beta_C$ of the compressor 8;
the signal $S_T$ indicative of the ambient temperature;
the signal $S_{TE}$ indicative of the exhaust gas temperature $T_E$;
the signal $S_N$ indicative of the angular speed of the shaft 5; and
the signal $S_R$ indicative of the position of the regulating valve 13.

Once the measurement signals have been acquired, the control device calculates the current compression ratio $\beta_C$ from the signal $S_\beta$ (block 110) and determines the values of the corrective temperature coefficient $C_T$, of the corrective speed coefficient $C_N$, and of the corrective flowrate coefficient $C_Q$ (block 120) using functions determined experimentally and stored, for example, in the form of tables.

Once the current compression ratio $\beta_C$ and the current values of the corrective temperature coefficient $C_T$, of the corrective speed coefficient $C_N$, and of the corrective flowrate coefficient $C_Q$ are available, the control device 7 calculates the normalized compression ratio $\beta_N$ applying Eq. (1) (block 130) .

Next (block 140), the control device 7 determines the load conditions of the gas turbine 10 on the basis of the value of the normalized compression ratio $\beta_N$. For this purpose, a function is used, stored for instance in the form of a table in the control device 7. The function may be defined experimentally, starting from historic series, or else using a model of the system 1, which can be described with sufficient precision to yield reliable results.

In an alternative embodiment, instead of determining the load conditions of the gas turbine 10 directly from the normalized compression ratio $\beta_N$, the control device 7 calculates an estimate of the power supplied by the gas turbine 10 on the basis of the normalized compression ratio $\beta_N$. The load conditions of the gas turbine 10 are then determined as a function of the estimate of the power delivered.

After determining the current load conditions of the gas turbine 10, the control device 7 selects respective setpoints for the critical quantities that significantly affect the efficiency of the gas turbine 10 (block 150). In particular, the control device 7 defines a first setpoint $SP_{TE}$, indicative of a target temperature of the exhaust gas, and a second setpoint $SP_P$, indicative of a target pilot fuel flowrate to be fed to the pilot burners of the combustion chamber 9.

Finally (block 160), the control device 7 applies a first regulating signal $S_{IGV}$ to the IGV actuator 15 and a second regulating signal $S_{FV}$ to the fuel valve 16 in such a way that the temperature exhaust gas $T_E$ and the pilot fuel flowrate $Q_{FP}$ supplied to the pilot burners 9a tend to reach the first setpoint $SP_{TE}$ and the second setpoint $SP_P$, respectively.

Thanks to the method described, the power supplied by the gas turbine of a single-shaft combined-cycle system can be easily estimated with good precision and in a reliable way, also considering the fact that the measurement of the current compression ratio $\beta_C$ is normally available in the systems. The parameters of the gas turbine can thus be correctly set as a function of the load and of the ambient conditions, and it is possible to maintain optimal conditions of combustion with high efficiency and low emissions of pollutant substances, in particular NOx.

Finally, it is evident that modifications and variations may be made to the method and to the system described herein, without departing from the scope of the present invention, as defined in the annexed claims.

**Claims**

1. A method of controlling a combined-cycle system comprising a compressor (8), a gas turbine (10), a steam turbine (3), and an electric generator (4), all coupled to a same shaft (5);
   the method comprising:

   detecting a current compression ratio ($\beta_C$) of the compressor (8);
   the method being **characterized by**:

   calculating a normalized compression ratio ($\beta_N$) on the basis of the current compression ratio ($\beta_C$);
   determining a load condition of the gas turbine (10) on the basis of the normalized compression ratio ($\beta_N$);
   selecting a setpoint ($SP_{TE}$, $SP_P$) for at least one operating quantity ($T_E$, $Q_{FP}$) of the gas turbine (10) on the basis of the determined condition of load of the gas turbine (10); and
   applying regulating signals ($S_{IGV}$, $S_{FV}$) to actuators (15, 16) of the gas turbine (10), so that the operating quantity ($T_E$, $Q_{FP}$) of the gas turbine (10) tends to reach the setpoint.

2. The method according to Claim 1, wherein calculating the normalized compression ratio ($\beta_N$) comprises determining a ratio between the current compression ratio ($\beta_C$) and a reference-condition compression ratio ($\beta_R$).

3. The method according to Claim 1 or Claim 2, wherein calculating the normalized compression ratio ($\beta_N$) comprises applying a corrective temperature coefficient ($C_T$) as a function of an ambient temperature.

4. The method according to any one of the preceding claims, wherein calculating the normalized compression ratio ($\beta_N$) comprises applying a corrective speed coefficient ($C_N$), as a function of a velocity of rotation of the gas turbine (10).

5. The method according to any one of the preceding claims, wherein calculating the normalized compression ratio ($\beta_N$) comprises applying a corrective flowrate coefficient ($C_Q$) as a function of an estimate of an anti-icing flowrate ($Q_{AI}$) taken at outlet from the compressor (8) and fed back at inlet to the compressor (8).

6. The method according to Claim 1, wherein the normalized compression ratio ($\beta_N$) is given by

$$\beta_N = \frac{\beta_C}{\beta_R} C_T C_N C_Q$$

where $\beta_N$ is the normalized compression ratio, $\beta_C$ is the current compression ratio, $\beta_R$ is the reference-condition compression ratio; $C_T$ is a corrective temperature coefficient, depending upon an ambient temperature, $C_N$ is a corrective speed coefficient, depending upon a rotation speed of the gas turbine (10), and $C_Q$ is a corrective flowrate coefficient, depending upon an estimate of an anti-icing flowrate taken at outlet from the compressor (8) and fed back at inlet to the compressor (8).

7. The method according to any one of the preceding claims, wherein determining the load condition of the gas turbine (10) comprises determining an estimate of a power supplied by the gas turbine (10) as a function of the normalized compression ratio ($\beta_N$).

8. The method according to any one of the preceding claims, wherein the at least one operating quantity comprises an exhaust gas temperature ($T_E$) of the gas turbine (10), and the actuators comprise IGV actuators (15).

9. The method according to any one of the preceding claims, wherein the at least one operating quantity comprises a pilot fuel flowrate ($Q_{FP}$) to be supplied to pilot burners (9a) of the gas turbine (10), and the actuators comprise a fuel valve (16).

10. A combined-cycle system comprising:

   a compressor (8), a gas turbine (10), a steam turbine,
   and an electric generator, all coupled to the same shaft; and
   measuring devices (6), for supplying measurement signals ($S_\beta$, $S_T$, $S_{TE}$, $S_N$, $S_R$) indicative of a current compression ratio ($\beta_C$) of the compressor (8);
   **characterized by** a control device (7), configured to:

   calculate the current compression ratio ($\beta_C$) from the measurement signals ($S_\beta$);
   calculate a normalized compression ratio ($\beta_N$) on the basis of the current compression ratio ($\beta_C$);
   determine a load condition of the gas turbine (10) on the basis of the normalized compression ratio ($\beta_N$);
   select a setpoint ($SP_{TE}$, $SP_P$) for at least one operating quantity ($T_E$, $Q_{FP}$) of the gas turbine (10) on the basis of the load condition of the gas turbine (10) determined; and
   apply regulating signals ($S_{IGV}$, $S_{FV}$) to actuators (15, 16) of the gas turbine (10), so that the operating quantity ($T_E$, $Q_{FP}$) of the gas turbine (10) tends to reach the setpoint.

11. The system according to Claim 10, wherein the control device (7) is further configured to calculate the normalized compression ratio ($\beta_N$) on the basis of a ratio between the current compression ratio ($\beta_C$) and a reference-condition compression ratio ($\beta_R$).

12. The system according to Claim 10 or Claim 11, wherein the control device (7) is further configured to calculate the normalized compression ratio ($\beta_N$) on the basis of a corrective temperature coefficient ($C_T$) depending upon an ambient temperature.

13. The system according to any one of Claims 10 to 12, wherein the control device (7) is further configured to calculate the normalized compression ratio ($\beta_N$) on the basis of a corrective speed coefficient ($C_N$), depending upon a speed of the gas turbine (10).

**14.** The system according to any one of Claims 10 to 13, wherein the control device (7) is further configured to calculate the normalized compression ratio ($\beta_N$) on the basis of a corrective flowrate coefficient ($C_Q$), depending upon an estimate of an anti-icing flowrate taken at outlet from the compressor (8) and fed back at inlet to the compressor (8).

**15.** The system according to Claim 10, wherein the control device (7) is further configured to calculate the normalized compression ratio ($\beta_N$) as

$$\beta_N = \frac{\beta_C}{\beta_R} C_T C_N C_Q$$

where ($\beta_N$ is the normalized compression ratio, $\beta_C$ is the current compression ratio, $\beta_R$ is the reference-condition compression ratio; $C_T$ is a corrective temperature coefficient, depending upon an ambient temperature, $C_N$ is a corrective speed coefficient, depending upon a speed of the gas turbine (10), and $C_Q$ is a corrective flowrate coefficient, depending upon an estimate of an anti-icing flowrate, taken at outlet from the compressor (8) and fed back at inlet to the compressor (8).

**16.** The system according to any one of Claims 10 to 15, wherein determining the load condition of the gas turbine (10) comprises determining an estimate of a power supplied by the gas turbine (10) as a function of the normalized compression ratio ($\beta_N$).

Fig. 1

**Fig. 2**

**Fig. 3**

Europäisches
Patentamt
European
Patent Office
Office européen
des brevets

**EUROPEAN SEARCH REPORT**

Application Number

EP 11 19 5835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/201132 A1 (HIRAYAMA KAIICHIROU [JP] ET AL) 14 September 2006 (2006-09-14) * paragraphs [0015] - [0018], [0115], [0122] - [0126], [0171]; figures 1,4-7,36-41 * | 1,10 | INV. F01K23/10 F01K23/14 F02C9/22 F02C9/28 |
| A | WO 2009/109446 A1 (ALSTOM TECHNOLOGY LTD [CH]; HOFFMANN JUERGEN [CH]; DAXER JOHANN JOSEF) 11 September 2009 (2009-09-11) * page 11, line 17 - page 12, line 7; figure 1 * | 1,10 | |
| A | EP 2 128 406 A1 (SIEMENS AG [DE]) 2 December 2009 (2009-12-02) * paragraphs [0001], [0012], [0015] - [0017], [0025], [0029], [0030], [0043] - [0045]; claims 1,3-5; figure 2 * | 1,10 | |
| A | US 2007/271024 A1 (FUJII KENTARO [JP] ET AL) 22 November 2007 (2007-11-22) * paragraphs [0010], [0015], [0018], [0019], [0075], [0076], [0080], [0093]; figure 1 * | 1,10 | TECHNICAL FIELDS SEARCHED (IPC) F01K F02C |

The present search report has been drawn up for all claims

| Place of search | Date of completion of the search | Examiner |
|---|---|---|
| Munich | 20 April 2012 | Coquau, Stéphane |

EPO FORM 1503 03.82 (P04C01)

## ANNEX TO THE EUROPEAN SEARCH REPORT
## ON EUROPEAN PATENT APPLICATION NO.

EP 11 19 5835

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2012

| Patent document cited in search report | | | Publication date | Patent family member(s) | | Publication date |
|---|---|---|---|---|---|---|
| US 2006201132 | A1 | | 14-09-2006 | NONE | | |
| WO 2009109446 | A1 | | 11-09-2009 | EP | 2260193 A1 | 15-12-2010 |
| | | | | JP | 2011513635 A | 28-04-2011 |
| | | | | US | 2011037276 A1 | 17-02-2011 |
| | | | | WO | 2009109446 A1 | 11-09-2009 |
| EP 2128406 | A1 | | 02-12-2009 | AT | 497094 T | 15-02-2011 |
| | | | | CN | 101592085 A | 02-12-2009 |
| | | | | EP | 2128406 A1 | 02-12-2009 |
| | | | | JP | 2009287554 A | 10-12-2009 |
| | | | | US | 2009288420 A1 | 26-11-2009 |
| US 2007271024 | A1 | | 22-11-2007 | CN | 101079199 A | 28-11-2007 |
| | | | | DE | 102007003472 A1 | 29-11-2007 |
| | | | | JP | 4831820 B2 | 07-12-2011 |
| | | | | JP | 2007309279 A | 29-11-2007 |
| | | | | US | 2007271024 A1 | 22-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006201132 A1